# EUROPÄISCHE PATENTANMELDUNG

(11) **EP 2 399 464 A1**
(43) Veröffentlichungstag der Anmeldung: **28.12.2011**
(21) Anmeldenummer: 10167403.4
(22) Anmeldetag: 25.06.2010
(51) Int. Cl.: A23L 3/00, A23L 3/01, A23L 3/18, A23L 3/26

(54) **Schutzwirkung elektromagnetischer Strahlung auf pflanzliche Produkte**

(71) Anmelder: Bühler AG, 9240 Uzwil (CH)
(72) Erfinder: Abivardi, Cyrus, 8006, Zürich (CH)
(74) Vertreter: Hepp Wenger Ryffel AG

(57) **Zusammenfassung**

Die vorliegende Erfindung betrifft ein Verfahren, eine Vorrichtung (1) sowie eine Mühlenanlage (10), eine Erntemaschine, einen Entlader und eine Silobefüllungsanlage mit einer Vorrichtung (1) zum präventiven Schutz von pflanzlichen Produkten wie etwa Lebensmitteln, insbesondere Getreide (5), Obst, Gemüse, Hülsenfrüchten und/oder Nüssen, vor Befall durch Schädlinge und/oder Krankheitserreger. Dabei wird das Produkt einer elektromagnetischen Strahlung (3) ausgesetzt, vorzugsweise im Radio- und Mikrowellenbereich.

## Beschreibung

Die vorliegende Erfindung betrifft ein Verfahren, eine Vorrichtung sowie eine Mühlenanlage, eine Erntemaschine, einen Entlader und eine Silobefüllungsanlage mit einer Vorrichtung zum präventiven Schutz von pflanzlichen Produkten, insbesondere Lebensmitteln wie Getreide, Obst, Gemüse, Hülsenfrüchten und/oder Nüssen, und/oder wachsenden Pflanzen vor Befall durch Schädlinge und/oder vor Krankheitserregern.

Ein grosses Problem bei der Verarbeitung von pflanzlichen Produkten, insbesondere Lebensmitteln, stellt der Befall durch Schädlinge und/oder Krankheitserreger dar, insbesondere der Befall geernteter Getreidekörner. Unter einem Schädling wird hier und im Folgenden ein Organismus verstanden, welcher zur Zerstörung des pflanzlichen Produktes führen kann, aber nicht direkt eine Krankheit verursacht. Zu den Schädlingen gehören vor allem Insekten, Milben, Schnecken sowie Nagetiere. Unter Krankheitserregern werden hier und im Folgenden Stoffe und Organismen verstanden, die beim Konsumenten des Produktes gesundheitsschädigende Abläufe verursachen und/oder eine Erkrankung des pflanzlichen Produktes selbst bewirken. Der Konsument kann ein Mensch oder ein Tier sein; der Krankheitserreger wird dann entsprechend als humanpathogen bzw. tierpathogen bezeichnet. Humanpathogene und tierpathogene Stoffe können beispielsweise giftige Stoffe produzieren, wie z. B. Mykotoxine. Beispielsweise kann es sich dabei um Schimmelpilze handeln. Ein Krankheitserreger, der eine Erkrankung des pflanzlichen Produktes bewirkt, wird Pflanzenpathogen genannt. Schimmel- und Insektenbefall sind die grössten Faktoren, die zu Qualitätsverlust und verminderter Lagerfähigkeit von Getreide führen.

Insbesondere in tropischen und subtropischen Gebieten ist die Verlustrate von eingelagertem Getreide besonders hoch, da die klimatischen Eigenschaften ideale Bedingungen für die Verbreitung von Schädlingen bieten. Der weltweite Verlust an Getreide von der Ernte bis zum Konsumenten wird auf 10-25% geschätzt (Bala B.K.: Drying and storage of cereal grains, Science Publisher, USA, 1997).

Im Bestreben, den Befall von pflanzlichen Produkten und insbesondere von geerntetem Getreide durch Schädlinge und/oder Krankheitserreger zu verhindern oder zu reduzieren, werden verschiedene Verfahren angewendet. Das klassische Verfahren besteht dabei im Einsatz von Pestiziden, insbesondere von Insektiziden und/oder Fungiziden. Da diese jedoch auch der Umwelt und der Gesundheit der Konsumenten schaden können, einen produktfremden Geschmack und/oder Geruch von Lebensmitteln verursachen können und ausserdem eine erhöhte Resistenz der Schädlinge gegenüber den eingesetzten Chemikalien beobachtet werden kann, wird zur Zeit von verschiedenen Stellen aktiv nach einem alternativen Verfahren geforscht.

Bereits in den 1930er-Jahren wurden in der US 1,972,050 ein Verfahren und eine Vorrichtung zum Abtöten von Schädlingen in Getreide durch eine oszillierende Hochfrequenzstrahlung beschrieben. Dabei werden sämtliche Schädlinge inklusive deren Larven oder Puppen durch die Strahlung abgetötet. Die Vorrichtung besteht dabei aus einer Fallstrecke, die durch eine entsprechende Strahlenquelle bestrahlt wird.

Die Benutzung elektromagnetischer Strahlung zur Eindämmung des Befalls von Getreide und anderen pflanzlichen Produkten wie Lebensmitteln durch Schädlinge und/oder Krankheitserreger wurde über die letzten Jahrzehnte immer wieder untersucht. Beispielsweise wurde der Einsatz von elektromagnetischer Strahlung zum selektiven Erhitzen von Insekten in Getreide und Nüssen untersucht (Frings H.: Factors determining the effects of radiofrequenzy electromagnetic fields and materials they infest, Journal of economic entomology, 1952, 45(3):396-408). Auch wurde die Benutzung von Mikrowellenstrahlung zum Töten von Holzwurmlarven untersucht (Andreucetti et al.: Microwave destruction of woodworms, Journal of Microwave Power and Electromagnetic Energy, 1994, 29(3):153-160). Eine 99%ige Mortalität für die drei prominenten Schädlinge *Sitophilus oryzae* (Reiskäfer), *Tribolium castaneum* (Rotbrauner Reismehlkäfer) und *Rhizoperta dominica* (Getreidekapuziner) wurde bei einer Bestrahlung durch eine 28-GHz-Mikrowellenstrahlung bei einer Leistung von 200 kW festegestellt (Halverson et al.: High-power microwave radiation as an alternative insect control method for stored products, Journal of Economic Entomology, 1996, 89(5):1638-1648).

Die US 2005/0287254 beschreibt einen Apparat zum Zerstören von Pathogenen mittels einer Radiofrequenz, wobei eine Rechteckschwingung auf eine Trägerfrequenz aufmoduliert wird.

US 6,346,693 offenbart ein Verfahren zum Trocknen von Weizen und zum Abtöten von Insekten. Dazu wird eine Radiofrequenz im Bereich von 1 MHz bis 1 GHz mit einer Leistung zwischen 10 und 50 kW benutzt. Zunächst werden die Weizenkörner mit niedriger Leistung getrocknet und anschliessend die Insekten durch einen kurzen Puls mit hoher Leistung abgetötet.

In der US 5,339,564 wird die Verwendung von elektromagnetischen Wellen zur Zerstörung der Mitochondrien von Pathogenen beschrieben. Dabei stören spezifische Frequenzen die Funktion der ATP-Synthase oder der Na/K-ATPase.

Die JP 09-103224 offenbart eine Maschine, die über ein Getreidefeld gezogen werden kann und dabei mittels elektromagnetischer Wellen Insekten, Pilze und Unkraut zerstört. Dabei ist ein Magnetron auf einem fahrbaren Untersatz angebracht.

Weiter beschreiben die US 4,416,908, CA 2,018,547, US 5,968,401 sowie die ES 2 185 484 allesamt Vorrichtungen und Verfahren, bei denen Schädlinge durch elektromagnetische Strahlung abgetötet werden.

Alle diese Verfahren und Vorrichtungen, welche elektromagnetische Strahlung benutzen, sind darauf angelegt, bereits befallene pflanzliche Produkte, insbesondere Lebensmittel wie etwa Getreide, zu behandeln. D.h. zumindest ein Teil des Getreides ist vor der Behandlung bereits durch Schädlinge zerstört, was einen gewissen materiellen wie auch qualitativen Verlust bedeutet.

Eine Aufgabe der Erfindung liegt darin, ein insbesondere kontinuierlich durchführbares Verfahren vorzulegen, welches die Nachteile des Bekannten verhindert und insbesondere zum präventiven Schutz von pflanzlichen Produkten wie Lebensmitteln vor Befall durch Schädlinge und/oder Krankheitserreger geeignet ist, ohne einen negativen Einfluss auf die Umwelt oder die menschliche Gesundheit aufzuweisen. Diese Aufgabe wird mit einem Verfahren gemäss Anspruch 1 gelöst.

Beim erfindungsgemässen Verfahren zum präventiven Schutz von pflanzlichen Produkten wie etwa Lebensmitteln, insbesondere von Getreide, Obst, Gemüse, Hülsenfrüchten und/oder Nüssen, vor Befall durch Schädlinge und/oder Krankheitserreger wird das pflanzliche Produkt, insbesondere das Getreide, einer elektromagnetischen Strahlung ausgesetzt. Bei dem Getreide kann es sich beispielsweise um Weizen handeln. Das Getreide kann in Form ganzer Körner vorliegen oder auch in zerkleinerter, insbesondere in gemahlener Form, wie beispielsweise als Getreidemehl. Der Begriff "pflanzliches Produkt" umfasst ausser Lebensmitteln auch weitere, nicht zum Verzehr geeignete Produkte, wie beispielsweise Baumwolle und Tabak.

Bevorzugt ist das pflanzliche Produkt vor der Bestrahlung im Wesentlichen frei von Schädlingen und/oder Krankheitserregern.

Überraschend wurde gefunden, dass sich durch Bestrahlung von im Wesentlichen unbefallenem Getreide durch elektromagnetische Strahlung eine Schutzwirkung vor Befall durch Schädlinge und/oder Krankheitserreger einstellt, welche auch nach 5 Wochen nicht nachliess. Dabei wurde das pflanzliche Produkt nur mit geringer Leistung während weniger Minuten bestrahlt, wobei die Strahlung in den meisten Fällen nicht ausreicht, um allfällig vorhanden Insekten zu töten.

Das erfindungsgemässe Verfahren eignet sich also insbesondere zum Behandeln von Getreide vor der Einlagerung oder der Weiterverarbeitung. Durch die Bestrahlung wird das pflanzliche Produkt nicht beschädigt, und es bleiben auch keine chemischen Rückstände im pflanzlichen Produkt, insbesondere auf den Getreidekörnern, zurück. Ausserdem lässt sich das Verfahren sicher und schnell durchführen, was eine kontinuierliche Behandlung des pflanzlichen Produkts möglich macht. Im Gegensatz dazu sind die aus dem Stand der Technik bekannten Verfahren derart zeitaufwendig, dass eine kontinuierliche Behandlung praktisch ausgeschlossen ist.

Als Getreide im Sinne der Anmeldung werden klassische Getreidesorten wie Mais, Reis, Weizen, Gerste, Sorghum, Durum, Hirse, Hafer, Roggen und Tricicale verstanden. Der Begriff "Lebensmittel" umfasst darüber hinaus auch Obst, Gemüse, Hülsenfrüchte und Nüsse.

Es wird derzeit vermutet (ohne dass die Erfindung hierauf zu beschränken ist), dass der erfindungsgemässe Effekt auf einer Veränderung der Oberfläche des pflanzlichen Produktes, einer Veränderung der im Produkt enthaltenen Proteine und Enzyme oder einer Kombination davon beruht. Insbesondere wird vermutet, dass die Oberfläche des pflanzlichen Produkts, beispielsweise von Getreide, durch die Einwirkung der elektromagnetischen Strahlung härter wird und daher das Eindringen von Schädlingen und/oder Krankheitserregern verhindert. Weiterhin wird vermutet, dass die Veränderung der Proteine und Enzyme, die in den Stoffwechsel der Schädlinge eingehen, eine Störung dieses Stoffwechsels bewirkt.

Das pflanzliche Produkt ist dabei bevorzugt vor der Bestrahlung im Wesentlichen frei von Schädlingen und/oder Krankheitserregern. Darunter wird verstanden, dass das Produkt im Regelfall vor der Bestrahlung überhaupt keine Schädlinge und/oder Krankheitserreger aufweist. Je nach Situation kann es jedoch vorkommen, dass bereits vor der Behandlung einige wenige Schädlinge und/oder Krankheitserreger vorhanden sind. In jedem Falle ist es das Ziel der Bestrahlung, das pflanzliche Produkt vor dem ersten Befall durch Schädlinge und/oder Krankheitserreger zu behandeln.

Das pflanzliche Produkt kann nach der Ernte der elektromagnetischen Strahlung ausgesetzt werden. Alternativ oder zusätzlich kann das pflanzliche Produkt vor der Ernte der elektromagnetischen Strahlung ausgesetzt werden. Beispielsweise kann es vor und/oder während der Keimung und/oder während des Wachstums, etwa auf einem Getreidefeld, der elektromagnetischen Strahlung ausgesetzt werden.

Bevorzugt wird das pflanzliche Produkt mit einer elektromagnetischen Strahlung bestrahlt, dessen Spektrum mindestens einen Frequenzanteil in einem wirksamen Bereich von 5 MHz bis 250 GHz enthält. Elektromagnetische Strahlung in diesem Frequenzbereich lässt sich durch eine Vielzahl von an sich bekannten Strahlenquellen leicht erzeugen. Einzelne Teilbereiche des wirksamen Bereiches können aufgrund von rechtlichen Vorschriften ausgeschlossen sein.

Das Spektrum der elektromagnetischen Strahlung kann eine oder mehrere Frequenzen, aber auch ein kontinuierliches Spektrum enthalten. Es ist nicht ausgeschlossen, dass das Spektrum auch ausserhalb des wirksamen Bereichs mindestens einen Frequenzanteil aufweist. Bevorzugt beträgt der Anteil der elektromagnetischen Strahlungsenergie, die den Frequenzanteilen im wirksamen Bereich zugeordnet ist, mindestens 90 %, bevorzugt mindestens 95 %, weiter bevorzugt mindestens 99 % der gesamten elektromagnetischen Strahlungsenergie, welcher das pflanzliche Produkt ausgesetzt wird.

Besonders bevorzugt enthält das Spektrum der elektromagnetischen Strahlung mindestens einen Frequenzanteil in einem wirksamen Bereich von 13 MHz bis 45 MHz, liegt also im Bereich von Radiowellen. Diese Radiowellen lassen sich einfach z.B. kapazitiv über zwei Elektroden oder induktiv über eine Spule erzeugen. Radiowellen können bevorzugt zur Behandlung von grösseren Produktvolumina eines pflanzlichen Produkts mit hoher Ionenleitfähigkeit eingesetzt werden, da die Radiowellen in derartige Produkte tiefer eindringen als beispielsweise Mikrowellen. Zudem erlauben Radiowellen in der industriellen Anwendung im Vergleich zu Mikrowellen aufgrund der grösseren Wellenlänge eine homogenere Behandlung des Produkts.

Alternativ oder zusätzlich kann das Spektrum der elektromagnetischen Strahlung mindestens einen Frequenzanteil in einem wirksamen Bereich von 400 MHz bis 25 GHz enthalten, also einen Frequenzanteil im Mikrowellenbereich. Mikrowellen werden bevorzugt zur Behandlung von kleineren Produktvolumina eines pflanzlichen Produkts mit dipolaren Eigenschaften eingesetzt. Aufgrund der höheren Energie lässt sich die Behandlungszeit mit Mikrowellen im Vergleich zu Radiowellen reduzieren. Die Mikrowellen können dabei durch an sich bekannte Strahlenquelle erzeugt werden, wie etwa durch ein Klystron, Magnetron oder dergleichen.

Der spezifische Energieeintrag, d. h. der Energieeintrag der elektromagnetischen Strahlung pro Masse des pflanzlichen Produkts, liegt bevorzugt im Bereich von 1 kWh/t bis 20000 kWh/t, weiter bevorzugt im Bereich von 1 kWh/t bis 50 kWh/t, besonders bevorzugt bei etwa 2 kWh/t. Bei einem typischen Massendurchsatz einer Getreidemühlenanlage von 20 t/h bis 100 t/h ergibt sich hieraus eine Leistung der Strahlenquelle im Bereich von 40 kW bis 200 kW. Unter der Leistung der Strahlung wird dabei die Abstrahlleistung der Strahlenquelle verstanden, wobei sichergestellt werden muss, dass das Produkt homogen bestrahlt wird.

Das pflanzliche Produkt wird bevorzugt zwischen 1 Sekunden und 5 Minuten, weiter bevorzugt zwischen 5 Sekunden und 4,5 Minuten, besonders bevorzugt zwischen 30 Sekunden und 4 Minuten bestrahlt. Als besonders effizient hat sich im Laborversuch eine Bestrahlungszeit zwischen 2 und 3 Minuten herausgestellt. Durch die relativ kurze Bestrahlung erfährt das pflanzliche Produkt keine Hitzeschäden. Ausserdem lässt sich durch die kurze Behandlungszeit das Verfahren kontinuierlich durchführen, was zu einer grossen Zeitersparnis führt.

Besonders bevorzugt wird das erfindungsgemässe Verfahren zur Behandlung von Mais, Reis, Weizen, Gerste, Sorghum, Durum, Hirse, Hafer, Roggen und/oder Triciale eingesetzt.

Das erfindungsgemässe Verfahren wird bevorzugt zum präventiven Schutz von pflanzlichen Produkten vor einem Befall durch mindestens einen der folgenden Schädlinge verwendet:
- *Tribolium spp.,*
- *Callosobruchus chinensis,*
- *Plodia interpunctella,*
- *Ephestia küehniella,*
- *Rhizopertha dominica,*
- *Trogoderma granarium,*
- *Sitophilus spp.,*
- *Cydia pomonella,*
- *Amyelios spp.*

Alternativ oder zusätzlich kann das erfindungsgemässe Verfahren zum präventiven Schutz von pflanzlichen Produkten vor einem Befall durch mindestens eines der folgenden Pflanzenpathogene verwendet werden:
- nach der Ernte auftretende Pflanzenpathogene, wie etwa
   o *Botrytis spp.,*
   o *Penicillium spp.,*
   o *Rhizopus spp.,*
   o *Mollinia spp.* oder
   o *Geotrichum spp.* oder
- beim Wachstum des pflanzlichen Produkts auftretende Pflanzenpathogene, wie etwa
   o *Phoma spp.,*
   o *Alternaria spp.,*
   o *Septoria spp.,*
   o *Phytophthora spp.,*
   o *Xanthomonas spp.,*
   o *Ascochyta spp.,*
   o *Colletotrichum spp.,*
   o *Rhizoctonia spp.,*
   o *Fusarium spp.,*
   o *Macrophomina spp.,*
   o *Puccinia spp.,*
   o *Tilletia spp.* oder
   o *Ustillago spp* oder
- Humanpathogene und Tierpathogene, insbesondere solche, die Mykotoxine produzieren, wie beispielsweise die folgenden Schimmelpilze:
   o *Aspergillus,*
   o *Fusarium,*
   o *Alternaria,*
   o *Penicillium.*

Weiter umfasst die vorliegende Erfindung die Verwendung elektromagnetischer Strahlung zum präventiven Schutz von pflanzlichen Produkten wie etwa Lebensmitteln, insbesondere von Getreide, Obst, Gemüse, Hülsenfrüchten und/oder Nüssen, vor Befall durch Schädlinge und/oder Krankheitserreger.

Die elektromagnetische Strahlung kann nach der Ernte verwendet werden. Alternativ oder zusätzlich kann sie vor der Ernte der verwendet werden. Beispielsweise kann sie vor und/oder während der Keimung und/oder während des Wachstums, etwa auf einem Getreidefeld, verwendet werden.

Bevorzugt enthält das Spektrum der elektromagnetischen Strahlung mindestens einen Frequenzanteil in einem wirksamen Bereich zwischen 5 MHz und 250 GHz, besonders bevorzugt zwischen 13 MHz bis 45 MHz und/oder zwischen 400 MHz bis 25 GHz auf.

Eine weitere Aufgabe der vorliegenden Erfindung ist das Bereitstellen einer Vorrichtung zur Behandlung von pflanzlichen Produkten wie Lebensmitteln, insbesondere von Getreide, Obst, Gemüse, Hülsenfrüchten und/oder Nüssen, für den präventiven Schutz vor Befall durch Schädlinge und/oder Krankheitserreger. Diese Aufgabe wird mit einer Vorrichtung gemäss Anspruch 10 gelöst.

Mit der erfindungsgemässen Vorrichtung ist das pflanzliche Produkt nach der Ernte durch mindestens ein Fördermittel, bevorzugt durch mindestens ein Förderband, kontinuierlich an einer elektromagnetischen Strahlenquelle vorbeiführbar. Alternativ kann das Fördermittel auch als Förderschnecke ausgebildet sein. Die Förderung kann auch durch die Gravitation des Produkts oder die Strömung eines Fluids bewirkt werden, in dem das Produkt geführt wird.

Durch das Bestrahlen des pflanzlichen Produkts wird eine präventive Schutzwirkung vor Befall durch Schädlinge und/oder Krankheitserreger erreicht. Durch das Fördermittel wird eine kontinuierliche Bestrahlung des Getreides erzielt. Insbesondere kann durch das aktive Befördern des pflanzlichen Produkts eine möglichst homogene Behandlungszeit insbesondere von Getreidekörnern erreicht werden. Dies ist z.B. bei einer konventionellen Fallstrecke nicht immer möglich, da eine solche Fallstrecke angesichts der im Stand der Technik nötigen grossen Behandlungszeiten äusserst lang sein müsste. Besonders bevorzugt ist das Fördermittel dabei ein Förderband. Alternativ können aber auch andere Fördermittel eingesetzt werden, wie z.B. eine Förderschnecke, die Gravitation des Produkts oder die Strömung eines Fluids, in dem das Produkt geführt wird.

Die Strahlenquelle ist vorzugsweise zur Emission einer elektromagnetischen Strahlung ausgebildet, deren Spektrum mindestens einen Frequenzanteil in einem wirksamen Bereich zwischen 5 MHz und 250 GHz enthält, bevorzugt zwischen 13 MHz und 45 MHz und/oder zwischen 400 MHz und 25 GHz.

Ferner umfasst die vorliegende Erfindung eine Mühlenanlage, welche mindestens eine erfindungsgemässe Vorrichtung aufweist. Dadurch können pflanzliche Produkte wie etwa Lebensmittel, insbesondere Weizen, vor ihrer Verarbeitung effizient vor dem Befall durch Schädlinge und/oder Krankheitserreger geschützt werden. Ausserdem werden die mit der Mühlenanlage erzeugten Mahlprodukte dadurch ebenfalls vor Befall durch Schädlinge und/oder Krankheitserreger geschützt.

Bevorzugt ist die Strahlenquelle der Vorrichtung zur Einbringung eines spezifischen Energieeintrages der elektromagnetischen Strahlung in das pflanzliche Produkt ausgebildet, der im Bereich von 1 kWh/t bis 20000 kWh/t, bevorzugt von 1 kWh/t bis 50 kWh/t, besonders bevorzugt bei etwa 2 kWh/t liegt. Dieser spezifische Energieeintrag basiert auf der Leistung der von der Strahlenquelle emittierten Strahlung und nicht auf der vom Produkt tatsächlich absorbierten Leistung.

Im Weiteren umfasst die vorliegende Erfindung eine Erntemaschine, welche mindestens eine erfindungsgemässe Vorrichtung aufweist, die in Produktflussrichtung nach einer Erntevorrichtung der Erntemaschine angeordnet ist. Bei der Erntemaschine kann es sich beispielsweise um einen Mähdrescher handeln, bei dem beispielsweise das geerntete Korn während des Beförderns zum Korntank durch elektromagnetische Strahlung bestrahlt wird.

Bevorzugt ist die Strahlenquelle der Vorrichtung zur Einbringung eines spezifischen Energieeintrages der elektromagnetischen Strahlung in das geerntete Getreide ausgebildet ist, der im Bereich von 1 kWh/t bis 20000 kWh/t, weiter bevorzugt im Bereich von 1 kWh/t bis 50 kWh/t, besonders bevorzugt bei etwa 2 kWh/t liegt. Dieser spezifische Energieeintrag basiert auf der Leistung der von der Strahlenquelle emittierten Strahlung und nicht auf der vom pflanzlichen Produkt tatsächlich absorbierten Leistung.

Darüber hinaus betrifft die Erfindung auch einen Entlader, insbesondere einen Schiffsentlader, und eine Silobefüllungsanlage, der/die mindestens eine wie oben beschriebene Vorrichtung umfasst.

Weitere Vorteile und Einzelmerkmale der Erfindung ergeben sich aus der nachfolgenden Beschreibung von Ausführungsbeispielen und aus den Figuren. Es zeigen:
- Fig. 1:: ein Diagramm zur Entwicklung von Samenkäfern (Callo*sobruchus chinensis L.*) in Bohnen mit verschiedenen Bestrahlungszeiten mit Mikrowellen;
- Fig. 2:: ein Diagramm zur Entwicklung von Amerikanischen Reismehlkäfern (*Tibolium confusum L.*) in Weizenmehl mit verschiedenen Bestrahlungszeiten mit Mikrowellen;
- Fig. 3:: eine erfindungsgemässe Vorrichtung zum Bestrahlen von Getreide;
- Fig. 4:: eine erfindungsgemässe Mühlenanlage;
- Fig. 5:: eine schematische Darstellung einer erfindungsgemässen Erntemaschine.

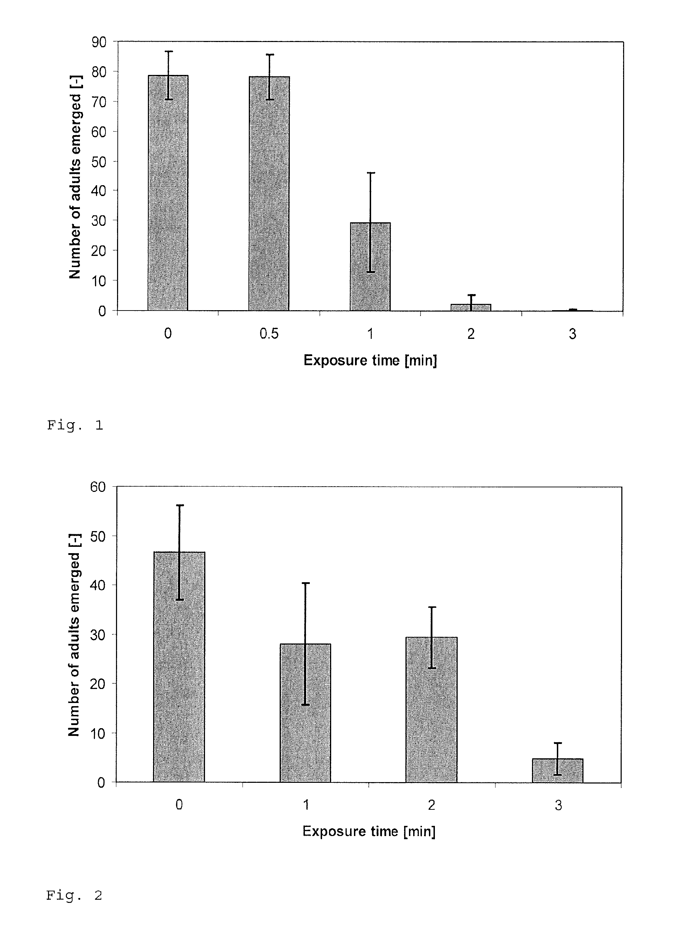

Figur 1 zeigt die Entwicklung von Samenkäfern (*Callosobruchus chinensis L.*) in Bohnen. Im Diagramm ist dabei die Anzahl der in einer Bohnenprobe entwickelten adulten Insekten der zweiten Generation nach dem Befall der Probe gegen die Bestrahlungszeit dieser Probe mit Mikrowellen aufgetragen.

Beim Versuch wurden zunächst Proben mit jeweils 10 unbefallenen Bohnen (Masse pro Bohne ca. 200 mg) für 0.5, 1, 2 und 3 Minuten in einer Mikrowelle mit einer Frequenz von 2450 MHz des Typs Samsung RE-1200 bei einer Leistung von 800 W bestrahlt. Als Kontrolle diente eine nicht bestrahlte Probe (Behandlungszeit 0 Minuten) mit ebenfalls 10 unbefallenen Bohnen.

Nach dem Abkühlen der Proben wurden jeweils zehn adulte Versuchsinsekten (*Callosobruchus chinensis L.*) in jede der Proben eingeführt. Anschliessend wurden die Proben für sechs Wochen in einem Inkubationsschrank bei einer Temperatur von 25-27 °C und einer relativen Luftfeuchtigkeit von 60-70 % aufbewahrt. Vier Wochen nach Beginn dieser Inkubationszeit wurden die entwickelten adulten Insekten der zweiten Generation gezählt und entfernt, und die Probe wurde in den Inkubationsschrank zurück gestellt. Diese Schritte wurden fünf und sechs Wochen nach Beginn der Inkubationszeit (also eine bzw. zwei Wochen nach der ersten Zählung) wiederholt. Das Diagramm in Figur 1 zeigt die Summe der Anzahlen der Insekten, die nach vier, fünf und sechs Wochen gezählt wurden. Da der Lebenszyklus von *Callosobruchus chinensis* L. weniger als vier Wochen betrug, kann dabei eine Überlappung mit der ersten Generation ausgeschlossen werden. Insgesamt wurden die Versuche fünfmal wiederholt, wobei die Fehlerbalken in Figur 1 die zugehörigen Standardabweichungen darstellen.

Dabei hat sich gezeigt, dass die unbehandelte Kontrollprobe einen starken Befall aufwies. Die bestrahlten Proben hingegen wiesen einen mittleren bis stark reduzierten Befall auf, wobei bei einer Bestrahlungszeit von 3 Minuten der Befall ganz verhindert werden konnte.

In Figur 2 ist in analoger Weise zu Figur 1 der Befall mit adulten Insekten (N) von Amerikanischen Reismehlkäfern (*Tibolium confusum L.*) in Weizenmehl gegen die Bestrahlungszeit des Weizenmehls mit Mikrowellen aufgetragen. Beim Versuch wurden zunächst Proben mit jeweils einem Gramm unbefallenen Weizenmehls analog zu den oben beschriebenen Versuchen mit Mikrowellen bestrahlt. Als Kontrolle diente eine nicht bestrahlte Probe (Behandlungszeit 0 Minuten) mit ebenfalls einem Gramm unbefallenen Weizenmehls.

Nach dem Abkühlen der Proben wurden jeweils zehn adulte Versuchsinsekten (*Tribolium confusum L.*) in jede der Proben eingeführt. Anschliessend wurden die Proben für zwölf Wochen in einem Inkubationsschrank bei einer Temperatur von 25-27 °C und einer relativen Luftfeuchtigkeit von 60-70 % aufbewahrt. Acht Wochen nach Beginn dieser Inkubationszeit wurden die entwickelten adulten Insekten der zweiten Generation gezählt und entfernt, und die Probe wurde in den Inkubationsschrank zurück gestellt. Diese Schritte wurden zehn und zwölf Wochen nach Beginn der Inkubationszeit (also zwei bzw. vier Wochen nach der ersten Zählung) wiederholt. Das Diagramm in Figur 1 zeigt die Summe der Anzahlen der Insekten, die nach acht, zehn und zwölf Wochen gezählt wurden. Da der Lebenszyklus von *Tribolium confusum L.* weniger als acht Wochen betrug, kann dabei eine Überlappung mit der ersten Generation ausgeschlossen werden. Insgesamt wurden die Versuche fünfmal wiederholt, wobei die Fehlerbalken in Figur 2 die zugehörigen Standardabweichungen darstellen. Auch hier zeigt sich, dass eine Bestrahlung des Getreides dieses vor anschliessendem Schädlingsbefall schützen kann.

Im Weiteren wurde untersucht, wie die Schutzwirkung der Bestrahlung anhält. Dabei wurden Proben von Bohnen für jeweils 3 Minuten in einer Mikrowelle des Typs Samsung RE-1200 bei einer Leistung von 800 W und einer Frequenz von 2450 MHz bestrahlt. Die Proben wurden daraufhin nach 0, 1, 2, 4 und 5 Wochen wie vorstehend beschrieben Insekten (*Callosobruchus chinensis L*.) ausgesetzt. Als Kontrolle diente eine nicht bestrahle Probe. Aus Tabelle 1 ist ersichtlich, dass die Schutzwirkung des erfindungsgemässen Verfahrens selbst noch nach 5 Wochen anhält und die Proben sicher vor Schädlingsbefall geschützt sind. Der entsprechende Versuch wurde fünfmal durchgeführt, wobei die Angaben die durchschnittliche Anzahl an adulten Insekten der zweiten Generation über alle fünf Versuche mit den zugehörigen Standardabweichungen darstellen.

**Tabelle 1**

| **Anzahl der Wochen nach Bestrahlung** | **Anzahl adulter Insekten in be-strahlter Probe** | **Anzahl adulter Insekten in unbestrahlter Probe (Kontrolle)** |
|---|---|---|
| 0 | 0.2 ± 0.5 | 62.4 ± 8.9 |
| 1 | 0.8 ± 0.8 | 63.6 ± 7.0 |
| 2 | 0.2 ± 0.5 | 64.2 ± 7.8 |
| 4 | 0.2 ± 0.5 | 60.0 ± 9.8 |
| 5 | 0.2 ± 0.5 | 63.2 ± 6.8 |

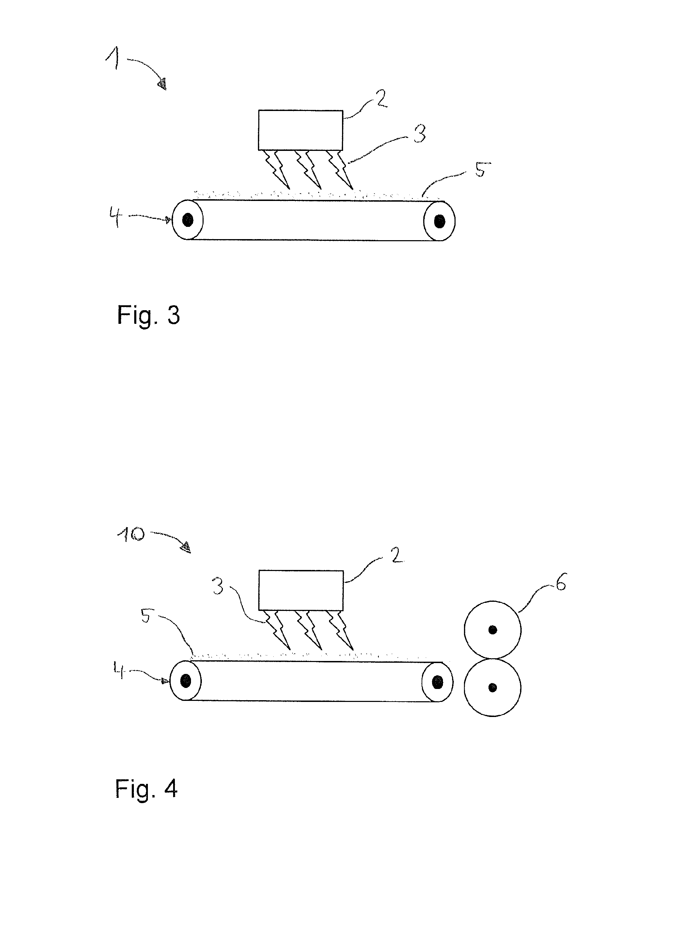

Figur 3 zeigt eine erste Ausführungsform einer erfindungsgemässen Vorrichtung 1 zum Bestrahlen von Getreide mit elektromagnetischer Strahlung. Das Getreide kann in Form ganzer Getreidekörner oder in Form von Getreidemehl vorliegen. Dabei wird das Getreide 5 auf einem Fördermittel, hier beispielhaft als Förderband 4 ausgestaltet, kontinuierlich an einer Strahlenquelle 2 vorbeigeführt. Die Strahlung 3 kann dabei Mikrowellen- oder Radiostrahlung sein. Die Strahlenquelle 2 kann je nach Art der Strahlung 3 eine Antenne, Plattenelektroden, ein Magnetron, eine Spule, ein Klystron oder dergleichen umfassen. Je nach Schichtdicke des Getreides 5 und der Fördergeschwindigkeit kann die Leistung der Strahlung variieren.

Figur 4 zeigt eine erfindungsgemässe Mühlenanlage 10. Dabei wird das Getreide 5 vor dem Zerkleinern, hier beispielsweise durch ein Walzenpaar 6, an einer Strahlenquelle 2 vorbeigeführt. Bevorzugt wird das Getreide 4 dabei durch ein Fördermittel mit möglichst gleichmässiger Geschwindigkeit unter an der Strahlenquelle 2 vorbei und durch die Strahlung 3 hindurch geführt. Das Fördermittel ist bevorzugt ein Förderband 4, wie beispielsweise in Figur 4 gezeigt. Alternativ können aber auch andere dem Fachmann bekannte Fördereinrichtungen verwendet werden, wie beispielsweise eine Förderschnecke, eine Fallstrecke oder ein Fluidstrom.

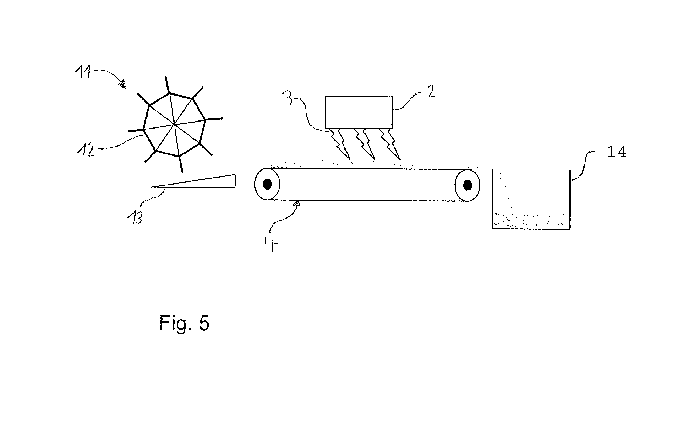

Die Figur 5 zeigt beispielhaft das Schema einer erfindungsgemässen Erntemaschine. Dabei wird das Getreide zunächst durch ein eine Erntevorrichtung bildendes Schneidwerk 11, beispielsweise aus Haspel 12 und Schneidmesser 13 bestehend, gemäht. Danach durchläuft das Getreide bevorzugt weitere Behandlungsschritte, wie z.B. Dreschen und/oder Sieben. Anschliessend werden die Getreidekörner über ein Fördermittel 4, vorzugsweise ein Förderband 4, an einer Strahlenquelle 2 vorbeigeführt, bevor sie eingelagert werden, beispielsweise in einem Korntank 14. Eine solche Erntemaschine ermöglicht es, das Getreide gleich nach dem Abernten vor Schädlingsbefall zu schützen, ohne dass dazu Chemikalien appliziert werden müssen.

## Patentansprüche

1. Verfahren zum präventiven Schutz von pflanzlichen Produkten wie etwa Lebensmitteln, insbesondere von Getreide (5), Obst, Gemüse, Hülsenfrüchten und/oder Nüssen, vor Befall durch Schädlinge und/oder Krankheitserreger, insbesondere humanpathogene und/oder tierpathogene und/oder pflanzenpathogene Krankheitserreger,
**dadurch gekennzeichnet, dass**
das Produkt, insbesondere das Getreide (5), einer elektromagnetischen Strahlung (3) ausgesetzt wird, insbesondere in einem kontinuierlichen Verfahren.

2. Verfahren gemäss Anspruch 1, wobei das pflanzliche Produkt vor der Bestrahlung im Wesentlichen frei von Schädlingen und/oder Krankheitserregern ist.

3. Verfahren gemäss einem der Ansprüche 1 bis 2, wobei das pflanzliche Produkt, insbesondere das Getreide, vor der Ernte, insbesondere vor und/oder während der Keimung und/oder währende des Wachstums des Produkts, und/oder nach der Ernte der elektromagnetischen Strahlung (3) ausgesetzt wird.

4. Verfahren gemäss einem der Ansprüche 1 bis 3, **dadurch gekennzeichnet, dass** das Spektrum der elektromagnetischen Strahlung (3) mindestens einen Frequenzanteil in einem wirksamen Bereich von 5 MHz bis 250 GHz, vorzugsweise von 13 MHz bis 45 MHz und/oder von 400 MHz bis 25 GHz enthält.

5. Verfahren gemäss einem der Ansprüche 1 bis 4, **dadurch gekennzeichnet, dass** der spezifische Energieeintrag der elektromagnetischen Strahlung (3) in das pflanzliche Produkt im Bereich von 1 kWh/t bis 20000 kWh/t, bevorzugt im Bereich von 1 kWh/t bis 50 kWh/t, besonders bevorzugt bei etwa 2 kWh/t liegt.

6. Verfahren gemäss einem der Ansprüche 1 bis 5, **dadurch gekennzeichnet, dass** das pflanzliche Produkt zwischen 1 Sekunden und 5 Minuten, bevorzugt zwischen 5 Sekunden und 4,5 Minuten, besonders bevorzugt zwischen 30 Sekunden und 4 Minuten bestrahlt wird.

7. Verfahren gemäss einem der Ansprüche 1 bis 6, **dadurch gekennzeichnet, dass** Mais, Reis, Weizen, Gerste, Sorghum, Durum, Hirse, Hafer, Roggen und/oder Triciale bestrahlt wird.

8. Verfahren gemäss einem der Ansprüche 1 bis 7, **dadurch gekennzeichnet, dass** das pflanzliche Produkt vor dem Befall durch mindestens einen der folgenden Schädlinge und/oder Krankheitserreger geschützt wird:
- *Tribolium spp.,*
- *Callosobruchus chinensis,*
- *Plodia interpunctella,*
- *Ephestia küehniella,*
- *Rhizopertha dominica,*
- *Trogoderma granarium,*
- *Sitophilus spp.,*
- *Cydia pomonella,*
- *Amyelios spp,*
- *Botrytis spp.,*
- *Penicillium spp.,*
- *Rhizopus spp.,*
- *Mollinia spp.,*
- *Geotrichum spp.,*
- *Phoma spp.,*
- *Alternaria spp.,*
- *Septoria spp.,*
- *Phytophthora spp.,*
- *Xanthomonas spp.,*
- *Ascochyta spp.,*
- *Colletotrichum spp.,*
- *Rhizoctonia spp.,*
- *Fusarium spp.,*
- *Macrophomina spp.,*
- *Puccinia spp.,*
- *Tilletia spp.,*
- *Ustillago spp,*
- *Aspergillus,*
- *Fusarium,*
- *Alternaria oder*
- *Penicillium.*

9. Verwendung elektromagnetischer Strahlung zum präventiven Schutz von pflanzlichen Produkten wie etwa Lebensmitteln, insbesondere von Getreide (5), Obst, Gemüse, Hülsenfrüchten und/oder Nüssen, vor Befall durch Schädlinge und/oder Krankheitserreger, insbesondere humanpathogene und/oder tierpathogene und/oder pflanzenpathogene Krankheitserreger.

10. Vorrichtung (1) zum Bestrahlen von pflanzlichen Produkten wie etwa Lebensmitteln, insbesondere von Getreide (5), Obst, Gemüse, Hülsenfrüchten und/oder Nüssen, mit elektromagnetischer Strahlung (3), **gekennzeichnet durch** mindestens ein Fördermittel, bevorzugt **durch** mindestens ein Förderband (4), mittels dessen das Produkt kontinuierlich an einer elektromagnetischen Strahlenquelle (2) vorbeiführbar ist.

11. Vorrichtung (1) gemäss Anspruch 10, **dadurch gekennzeichnet, dass** die Strahlenquelle (2) zur Emission einer elektromagnetischen Strahlung (3) ausgebildet ist, deren Spektrum mindestens einen Frequenzanteil in einem wirksamen Bereich zwischen 5 MHz und 250 GHz enthält, bevorzugt zwischen 13 MHz und 45 MHz und/oder zwischen 400 MHz und 25 GHz.

12. Mühlenanlage (10) umfassend mindestens eine Vorrichtung (1) gemäss einem der Ansprüche 10 und 11.

13. Erntemaschine zum Ernten von Getreide umfassend mindestens eine Erntevorrichtung, **dadurch gekennzeichnet, dass** in Produktflussrichtung nach der Erntevorrichtung eine Vorrichtung (1) gemäss einem der Ansprüche 10 und 11 angeordnet ist.

14. Entlader, insbesondere Schiffsentlader, oder Silobefüllungsanlage umfassend mindestens eine Vorrichtung (1) gemäss einem der Ansprüche 10 und 11.

15. Mühlenanlage (10) nach Anspruch 12, Erntemaschine nach Anspruch 13 oder Entlader oder Silobefüllungsanlage nach Anspruch 14, **dadurch gekennzeichnet, dass** die elektromagnetische Strahlenquelle (2) der Vorrichtung (1) zur Einbringung eines spezifischen Energieeintrages der elektromagnetischen Strahlung (3) in das Produkt, insbesondere in das geerntete Getreide (5), ausgebildet ist, der im Bereich von 1 kWh/t bis 20000 kWh/t, weiter bevorzugt im Bereich von 1 kWh/t bis 50 kWh/t, bevorzugt bei etwa 2 kWh/t liegt.
